# DEMANDE DE BREVET EUROPEEN

(11) **EP 0 541 406 A1**
(43) Date de publication de la demande: **12.05.1993**
(21) Numéro de dépôt: 92402457.3
(22) Date de dépôt: 09.09.1992
(51) Int. Cl.: H04B 1/66

(54) **Procédé et dispositif pour la transmission de deux informations dans le cadre d'une liaison dite à étalement de spectre**

(30) Priorité: 11.09.1991 FR 9111193
(71) Demandeur: SOCIETE NATIONALE D'ETUDE ET DE CONSTRUCTION DE MOTEURS D'AVIATION, "S.N.E.C.M.A.", F-75015 Paris (FR)
(72) Inventeur: Sebilet, Bruno Roger, F-92500 Rueil-Malmaison (FR)

(57) **Abrégé**

L'invention concerne un procédé de transmission simultanée d'information dans le cadre d'une liaison dite à étalement de spectre par séquence directe selon laquelle un code d'étalement, élaboré par un générateur de code (15) depuis une horloge de code (16), est modulé par une première information (11), une seconde information (17) étant transmise par modulation du retard (18) de ce code d'étalement. La modulation du retard du code d'étalement consiste sous la commande de la seconde information, soit à modifier le retard du code délivré par le générateur de code soit à modifier la fréquence de l'horloge du code. L'invention se rapporte également au dispositif pour la mise en oeuvre de ce procédé.

## Description

La présente invention concerne un procédé de transmission simultanée de deux informations distinctes dans le cadre d'une liaison dite à étalement de spectre par séquence directe ou pseudo-bruit.

Il est connu que lorsqu'il est recherché une transmission d'informations discrète, confidentielle et résistante aux brouillages de recourir aux techniques dites d'étalement du spectre à large bande. Dans la technique d'étalement par séquence directe, à l'émission, le signal utile module une séquence pseudo-aléatoire de valeurs binaires, le code d'étalement, dont le débit est beaucoup plus élevé que la largeur de bande du signal utile. A la réception, le signal codé reçu est corrélé avec un code pseudo-aléatoire , généré par le récepteur, dont le calage, par un dispositif de synchronisation, permet de restituer le signal utile initial. Toutefois, si cette technique permet la transmission de tout type d'information, analogique ou numérique, de débit variable, elle ne peut sans recourir aux techniques complexes de multiplexage et en n'utilisant qu'un seul code pseudo-aléatoire, assurer simultanément le transfert de plusieurs informations.

Le but de l'invention est de remédier à cet inconvénient et de mettre en oeuvre un procédé qui puisse assurer simplement la transmission simultanée de deux informations distinctes, une première et une seconde information, sans nécessiter la duplication des éléments existants dans le cadre d'une liaison classique par étalement de spectre par séquence directe.

Ce but est atteint, par le fait que, conformément à l'invention, la seconde information est transmise par modulation du retard du code d'étalement, laquelle consiste à modifier le retard du code délivré par le générateur de code sous la commande de la seconde information ou à modifier la fréquence de l'horloge du code sous la commande de la seconde information.

Selon un mode particulier de réalisation, la modification du retard consiste à retarder ou non le code d'étalement délivré par le générateur de code selon que la seconde information soit dans un premier état ou dans un second état.

L'invention concerne aussi un dispositif comportant au moins un émetteur et un récepteur, dite à étalement de spectre par séquence directe, selon laquelle un code d'étalement, élaboré par un générateur de code depuis une horloge de code, est modulé par la première information et engendre une information codée, caractérisé en ce que l'émetteur comporte des moyens pour transmettre la seconde information par modulation du retard du code d'étalement et en ce que le récepteur comporte des moyens de démodulation de ce retard pour restituer cette seconde information.

Les moyens de modulation du retard comportent des premiers moyens pour modifier le retard du mode d'étalement délivré par le générateur de code sous la commande de la seconde information ou bien des seconds moyens pour modifier la fréquence de l'horloge du code sous la commande de la seconde information.

Les moyens de démodulation du retard comportent un corrélateur qui mesure le retard entre l'information codée reçue et le code d'étalement généré par un générateur de code dont l'horloge de code est constitué par un oscillateur commandé en tension commandé par la mesure du retard.

Selon un mode particulier de réalisation les premiers moyens consistent en un commutateur à deux positions qui sous la commande de la seconde information à deux états délivre le code d'étalement retardé ou non selon l'état de cette seconde information.

Selon un autre mode particulier de réalisation les seconds moyens consistent en un oscillateur commandé en tension par la seconde information.

Selon encore un mode particulier de réalisation l'émetteur comporte un premier modulateur qui engendre l'information codée à transmettre par modulation d'une porteuse émission par un code d'étalement généré par un générateur de code dont l'horloge de code est constituée par un premier oscillateur commandé en tension commandé par la première information, laquelle porteuse est aussi modulée en fréquence par la seconde information, la porteuse et le code d'étalement étant issus chacun après multiplication/division de fréquence de cet oscillateur unique et en ce que le récepteur comporte un corrélateur qui délivre la première information par mesure du retard entre l'information codée transmise et une porteuse réception modulée dans un second modulateur par le code d'étalement généré par le générateur de code dont l'horloge de code est constituée par un second oscillateur commandé en tension commandé par information de mesure du retard du corrélateur, la seconde information étant restituée après démodulation de fréquence de l'information obtenue par comparaison de l'information codée reçue avec l'information délivrée par le second modulateur, la porteuse réception et le code d'étalement étant issus chacun après multiplication/division de fréquence de cet oscillateur unique.

D'autres caractéristiques et avantages de l'invention ressortiront mieux à la lecture de la description qui va suivre, faite à titre indicatif et non limitatif, en référence aux dessins annexés sur lesquels :
- la figure 1 représente un synoptique d'un émetteur selon l'invention utilisant une modulation par commande de retard du code d'étalement,
- la figure 2 représente les éléments de l'émetteur de la figure 1 assurant la transmission de la seconde information,
- la figure 3 représente un synoptique d'un récepteur destiné à coopérer avec l'émetteur de la figure 1,
- la figure 4 représente un schéma-bloc d'un corrélateur utilisé dans les récepteurs du type de l'invention,
- la figure 5 représente un synoptique d'un émetteur selon l'invention utilisant une modulation par variation du retard du code d'étalement,
- la figure 6 représente un synoptique d'un récepteur destiné à coopérer avec l'émetteur de la figure 5,
- la figure 7 représente un ensemble émetteur-récepteur cohérants fonctionnant selon l'invention.

Le système de communication qui apparaît au travers des différentes figures comporte au moins un émetteur et au moins un récepteur, l'émission et la réception des signaux étant effectuées par voie radioélectrique.

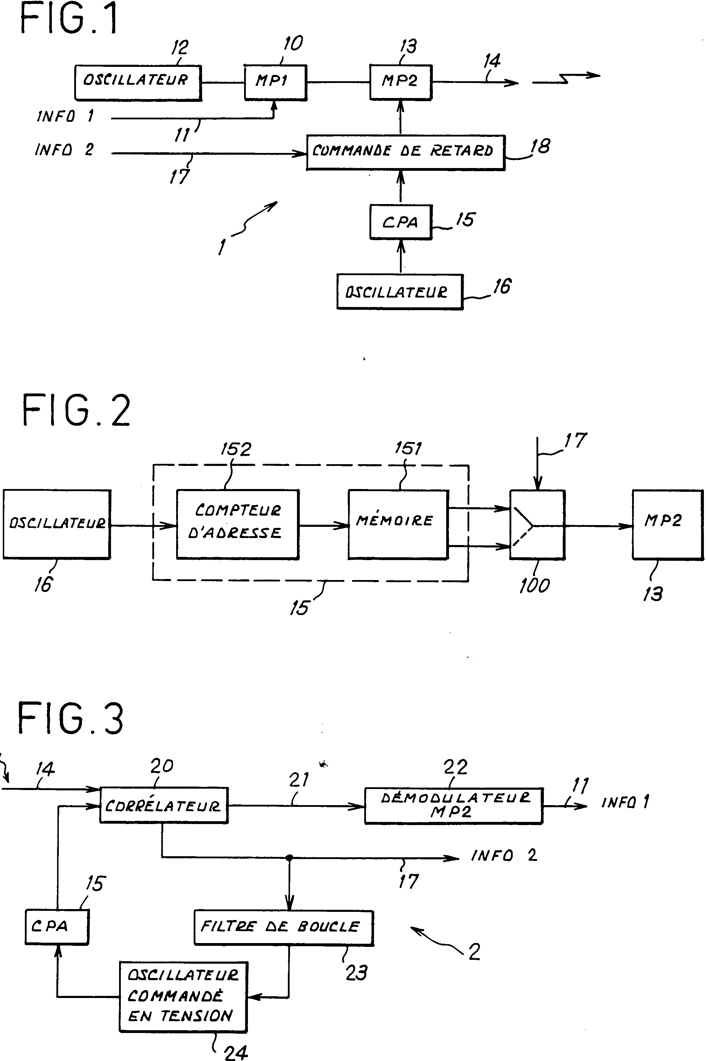

Les figures 1 à 4 illustrent un premier mode de réalisation dans lequel une seconde information est transmise par commande du retard du code d'étalement modulé par une première information.

La figure 1 montre plus précisément un schéma synoptique d'un émetteur réalisé conformément à l'invention. Cet émetteur 1 comporte d'une part un premier modulateur 10 qui reçoit une première information à faible bande 11, constituant un signal utile à transmettre pour moduler une porteuse radioélectrique générée par un premier oscillateur 12 et d'autre part un second modulateur 13 qui engendre une information codée à émettre 14 par modulation de l'information modulée issue du premier modulateur 10 par un code d'étalement avantageusement constitué d'une séquence binaire pseudo-aléatoire, élaboré par un générateur de code 15 commandé par une horloge 16.

Les modulateurs 10 et 13 sont avantageusement du type à deux états de phase (MP2) mais une modulation de fréquence ou de phase différente pourrait tout aussi bien être utilisée, de même que d'ailleurs une modulation d'amplitude en tout ou rien. Une seconde information à faible bande 17 qui constitue un autre signal utile et que l'on désire transmettre simultanément avec la première information 11 est appliquée indépendamment de cette première information en sortie du code d'étalement pour modifier le retard 18 de ce code proportionnellement à la valeur de l'information.

Cette modification du retard du code délivré par le générateur de code 15, sous la commande de la seconde information 17, peut être simplement réalisé par un commutateur à deux positions 100 comme le montre la figure 2. On retrouve l'horloge 16 et le générateur de code 15 lequel est constitué par une mémoire 151 qui contient deux versions du code pseudo-aléatoire décalées par exemple de 1 bit et un compteur d'adresse 152 qui permet le balayage de toute cette mémoire. En sortie de la mémoire on dispose à un instant donné d'un bit du code et d'un bit du code décalé, ces deux bits constituant les deux entrées du commutateur à deux positions 100 commandé par la seconde information 17 à transmettre et dont la sortie constitue le signal modulant du second modulateur 13. Dans cet exemple de réalisation, l'information à transmettre est une information à deux états, mais il est tout à fait possible en remplaçant ce commutateur à deux positions 100 par un multiplexeur, d'obtenir en entrée du second modulateur 13 un code d'étalement modulé par une information multi-état.

La figure 3 représente un schéma synoptique d'un récepteur coopérant avec l'émetteur de la figure 1. Le récepteur 2 comporte un corrélateur 20 qui compare l'information codée 14 transmise par l'émetteur 1 et reçue avec le code d'étalement du générateur de code 15 et restitue après démodulaticn 22 la première information à faible bande 11. La seconde information à faible bande 17 est reconstituée par la mesure du retard en sortie du corrélateur 20, laquelle mesure après filtrage 23 constitue l'entrée d'un oscillateur commandé en tension (OCT) 24 qui agit sur le générateur de code 15 pour asservir le retard du code d'étalement généré dans le récepteur 2 avec l'information codée 14 reçue. L'ensemble constitue en quelque sorte une boucle à verrouillage de retard qui, pour permettre la démodulation effective de cette seconde information faible bande 17, doit posséder une bande passante plus petite que celle de cette seconde information.

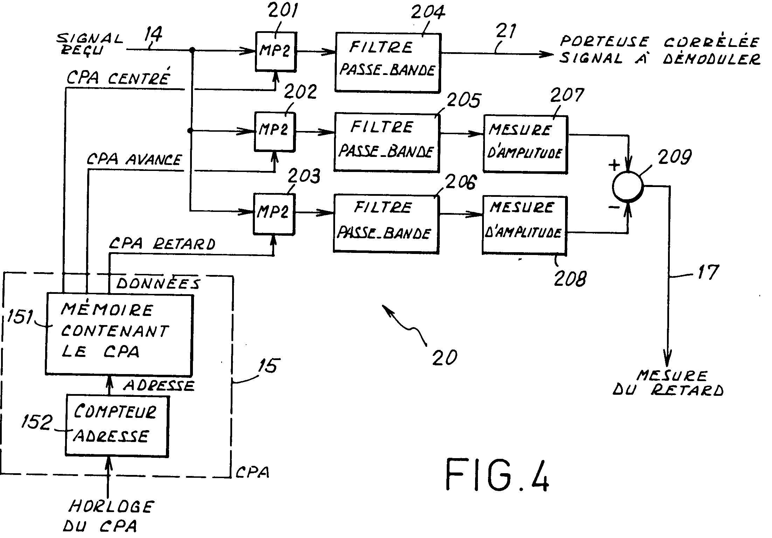

La figure 4 montre plus en détail le corrélateur 20. Celui-ci est constitué de trois modulateurs 201, 202, 203 recevant chacun l'information codée 14 et commandés par trois codes d'étalement identiques générés par le générateur de code 15 mais décalés chacun de 1 bit (ce décalage n'est pas obligatoire, tout décalage compris entre 0 et 2 étant aussi possible).

Le générateur de code 15, comme pour l'émetteur 1, comporte une mémoire 151 et un compteur d'adresse 152. Des filtres passe-bande 205, 206 disposés en sortie respectivement des modulateurs 202, 203 et suivis de détecteurs d'enveloppe 207, 208 donnent après sommation 209, lorsque le maximum de la fonction de corrélation entre ces deux signaux est réalisée, une mesure du retard entre l'information codée 14 reçue et le code d'étalement délivré par le générateur de code 15.

A cet instant, le premier modulateur 201 recevant le code d'étalement centré, les deux autres modulateurs 202 et 203 recevant le même code mais en avance ou en retard, délivre après filtrage 204 une information décodée 21 à destination du démodulateur 22 qui pourra alors restituer l'information initiale, c'est à dire la première information 11.

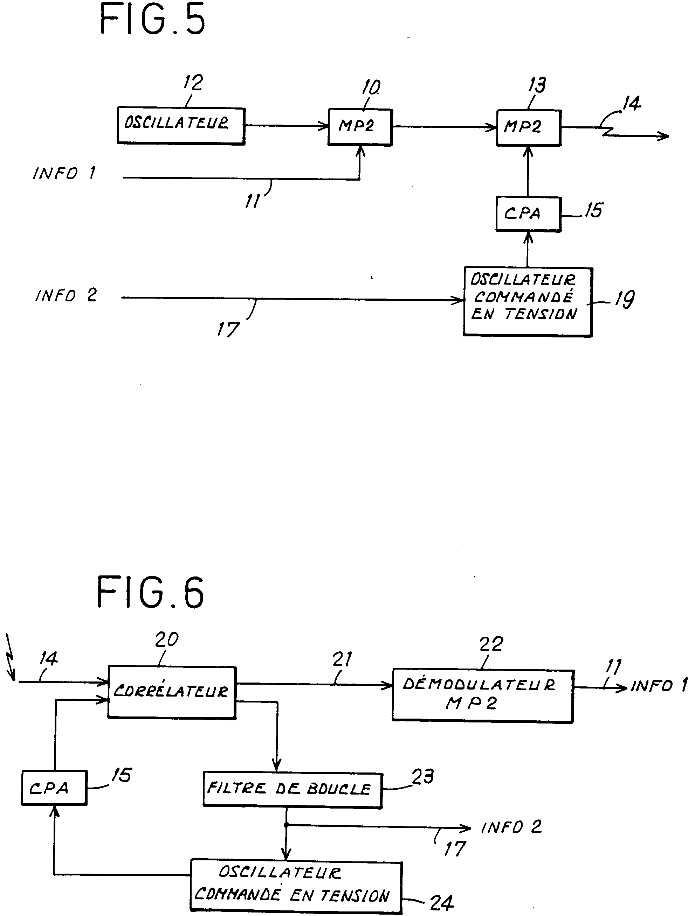

Les figures 5 et 6 illustrent un deuxième mode de réalisation dans lequel une seconde information est transmise par variation du retard du code d'étalement modulé par une première information au travers de la commande d'un oscillateur commandé en tension (OCT).

La figure 5 montre plus précisément un schéma d'un émetteur réalisé conformément à l'invention. Les éléments communs avec le premier mode de réalisation seront référencés de façon identique. L'émetteur 1 comporte d'une part le premier modulateur 10 qui reçoit la première information à faible bande 11, constituant un signal utile à transmettre, pour moduler une porteuse radioélectrique générée par le premier oscillateur 12 et d'autre part le second modulateur 13 qui engendre l'information codée à émettre 14 par modulation de l'information modulée issue du premier modulateur 10 par un code d'étalement élaboré par le générateur de code 15. Comme précédement, les modulateurs 10 et 13 sont avantageusement du type à deux états de phase (MP2). La seconde information à faible bande 17 que l'on désire transmettre simultanément avec la précédente constitue l'entrée de commande d'un oscillateur commandé en tension 19 dont la sortie délivre l'horloge du code dont la fréquence se trouve ainsi modifiée sous la commande de la seconde information 17. On obtient ainsi un retard qui n'est plus comme dans le premier mode de réalisation proportionnel à l'information mais qui est proportionnel à l'intégrale de la valeur de cette information 17.

La figure 6 représente un récepteur adapté à l'émetteur de la figure 5. Il présente une réalisation analogue à celle de la figure 3 avec un corrélateur 20 et un démodulateur 22 qui restitue le première information à faible bande 11 et une boucle à verrouillage de retard qui démodule la seconde information faible bande 17, celle-ci n'étant plus obtenue en sortie du corrélateur 20 mais en entrée de l'oscillateur commandé en tension 24. Pour un fonctionnement effectif, la boucle à verrouillage de retard doit avoir une bande passante supérieure à celle de la seconde information.

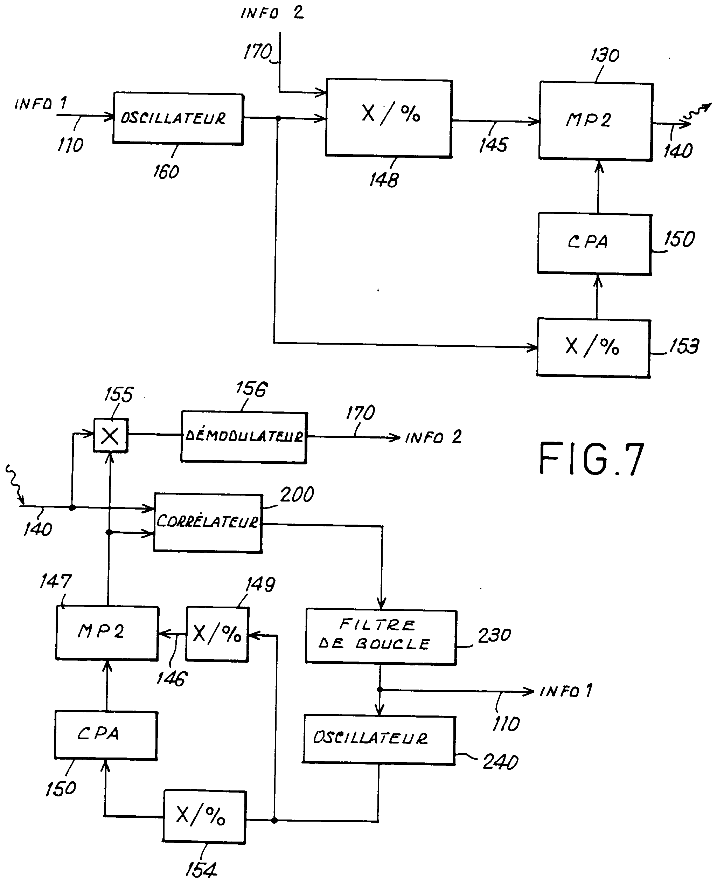

La figure 7 montre un troisième mode de réalisation dans lequel l'émetteur et le récepteur sont cohérents, c'est-à-dire pour lesquels la porteuse radioélectrique et l'horloge du code d'étalement sont élaborées depuis un unique oscillateur. Dans ce cas, pour effectuer la transmission simultanée de deux informations distinctes, il est possible de recourir à une modulation combinée. Cette figure illustre le cas, non limitatif, d'une première information 11 transmise selon une modulation à variation de retard du type de celle des figures 5 et 6 et d'une seconde information 17 transmise en modulation de fréquence. Une combinaison modulation à commande de retard du type de celle des figures 1 à 4 et modulation de phase est également envisageable sans plus de difficultés.

L'émetteur comporte un premier modulateur 130 qui engendre une information codée à transmettre 140 par modulation d'une porteuse émission 145 par un code d'étalement élaboré par un générateur de code 150. La porteuse émission comme le code d'étalement sont issus après multiplication/division de fréquence respectivement 148, 153 d'un premier oscillateur unique 160 commandé en tension par une première information faible bande 110. Cette commande variable de l'oscillateur 160 provoque une variation du retard (modulation en retard) du code d'étalement à l'image de celle décrite précédemment en regard de la figure 5, mais aussi une variation de fréquence de la porteuse émission 145. Une seconde information faible bande 170 vient moduler en fréquence la porteuse émission 145 par action au niveau du multiplicateur/diviseur de fréquence 148.

Le signal codé émis 140 comporte donc à la fois une porteuse modulée en fréquence par la seconde information 170 et modulée en retard mais aussi en fréquence par la première information 110. A la réception, un corrélateur 200 délivre après filtrage 230 la première information 110 par la mesure du retard entre l'information codée transmise 140 et une porteuse récepticn 146 modulée dans un second modulateur 147 par le code d'étalement généré par le générateur de code 150 dont l'horloge de code est constituée par un second oscillateur commandé en tension 240 par l'information de mesure de retard du corrélateur 200. Cet oscillateur 240 constitue une référence unique pour la porteuse réception 147 et le générateur de code 150 qui en sont directement issus après multiplication/division de fréquence respectivement 149, 154. La seconde information 170 est obtenue après démodulation de fréquence 156 de l'information provenant de la comparaison 155 entre l'information codée transmise 140 et l'information délivrée en sortie du second modulateur 146, laquelle information n'est autre qu'une porteuse modulée en retard et en fréquence par la première information 110 reconstituée en entrée de l'oscillateur commandé en tension 240.

Les différents modes de réalisation précédents montrent assez bien la diversité des possibilités offertes par l'invention et l'homme de l'art pourra à loisir en réaliser de nouveaux sans pour cela sortir du cadre de l'invention dont le domaine d'application est très général qu'il s'agisse de transmission entre mobiles ou plus simplement de transmission entre éléments informatiques par exemple.

## Revendications

1. Procédé de transmission simultanée d'information, dont une première et une seconde information, dans le cadre d'une liaison dite à étalement de spectre par séquence directe selon laquelle un code d'étalement, élaboré par un générateur de code depuis une horloge de code, est modulé par la première information, caractérisé en ce que la seconde information est transmise par modulation du retard du code d'étalement.

2. Procédé selon la revendication 1, caractérisé en ce que la modulation du retard du code d'étalement consiste à modifier le retard du code délivré par le générateur de code sous la commande de la seconde information.

3. Procédé selon la revendication 1, caractérisé en ce que la modulation du retard du code d'étalement consiste à modifier la fréquence de l'horloge du code sous la commande de la seconde information.

4. Procédé selon la revendication 2, caractérisé en ce que la modification du retard consiste à retarder ou non le code d'étalement délivré par le générateur de code selon que la seconde information soit dans un premier état ou dans un second état.

5. Dispositif pour la transmission simultanée d'information, dont une première et une seconde information, dans le cadre d'une liaison, comportant au moins un émetteur et un récepteur, dite à étalement de spectre par séquence directe, selon laquelle un code d'étalement, élaboré par un générateur de code depuis une horloge de code, est modulé par la première information et engendre une information codée, caractérisé en ce que l'émetteur comporte des moyens (15,18,19) pour transmettre la seconde information (17) par modulation du retard du code d'étalement et en ce que le récepteur comporte des moyens (15,20,24) de démodulation de ce retard pour restituer cette seconde information (17).

6. Dispositif selon la revendication 5, caractérisé en ce que les moyens de modulation du retard comportent des premiers moyens (18) pour modifier le retard du mode d'étalement délivré par le générateur de code (15) sous la commande de la seconde information (17).

7. Dispositif selon la revendication 5, caractérisé en ce que les moyens de modulation du retard comportent des seconds moyens (19) pour modifier la fréquence de l'horloge du code sous la commande de la seconde information (17).

8. Dispositif selon les revendications 5, 6 ou 7, caractérisé en ce que les moyens de démodulation du retard comportent un corrélateur (20) qui mesure le retard entre l'information codée (14) reçue et le code d'étalement généré par un générateur de code (15) dont l'horloge de code est constitué par un oscillateur commandé en tension (24) commandé par la mesure du retard.

9. Dispositif selon la revendication 6, caractérisé en ce que les premiers moyens (18) consistent en un commutateur à deux positions (100) qui sous la commande de la seconde information (17) à deux états délivre le code d'étalement retardé ou non selon l'état de cette seconde information (17).

10. Dispositif selon la revendication 7 ou la revendication 8, caractérisé en ce que les seconds moyens (19) consistent en un oscillateur commandé en tension par la seconde information (17).

11. Dispositif selon la revendication 5, caractérisé en ce que l'émetteur comporte un premier modulateur (130) qui engendre l'information cotée à transmettre (140) par modulation d'une porteuse émission (145) par un code d'étalement généré par un générateur de code (150) dont l'horloge de code est constituée par un premier oscillateur commandé en tension (160) commandé par la première information (110), laquelle porteuse (145) est aussi modulée en fréquence par la seconde information (170), la porteuse et le code d'étalement étant issus chacun après multiplication/division de fréquence (148,153) de cet oscillateur unique (160) et en ce que le récepteur comporte un corrélateur (200) qui délivre la première information (110) par mesure du retard entre l'information codée transmise (140) et une porteuse réception (146) modulée dans un second modulateur (147) par le code d'étalement généré par le générateur de code (150) dont l'horloge de code est constituée par un second oscillateur commandé en tension (140), commandé par information de mesure du retard du corrélateur (200), la seconde information (170) étant restituée après démodulation de fréquence (156) de l'information obtenue par comparaison de l'information codée reçue (140) avec l'information délivrée par le second modulateur (146), la porteuse réception et le code d'étalement étant issus chacun après multiplication/division de fréquence (149,154) de cet oscillateur unique (240).
